# EUROPEAN PATENT APPLICATION

(11) **EP 2 535 031 A1**
(43) Date of publication of application: **19.12.2012**
(21) Application number: 12172068.4
(22) Date of filing: 14.06.2012
(51) Int. Cl.: A61G 19/00, B62B 5/00

(54) **A coffin transporter**

(30) Priority: 17.06.2011 GB 201110296
(71) Applicant: McGuckin, William John, Castlederg, Tyrone BT81 7AN (GB)
(72) Inventor: McGuckin, William John, Castlederg, Tyrone BT81 7AN (GB)
(74) Representative: O'Connor, Michael Donal

(57) **Abstract**

This invention relates to a coffin transporter (1) comprising a platform (3) and a plurality of ground engaging wheels (5, 7, 9, 11), preferably castor wheels, supporting the platform. The platform (3) is suitably dimensioned to receive the end (31) of a coffin (33) thereon and has dimensions of the order of no greater than 0.75 metres wide by 0.75 metres long by 0.15 metres high. The platform (3) has a V-shaped transverse channel (21) extending across the width of the platform for reception of the end (31) of a coffin (33) therein. The coffin (33) may be mounted on the coffin transporter platform (3) in either a substantially upright or a substantially reclined configuration and the coffin transporter (1) may be used to manoeuver a coffin around a home with narrow doorways and/or passageways by a single person. This will enable easier and/or more dignified handling of the coffin.

## Description

This invention relates to a coffin transporter.

There are numerous types of coffin transporters known in the art. Some examples of these coffin transporters are described in UK Patent No. 305,892 in the name of Augustin, European Patent Application No. 1,201,217 in the name of Funeraria Gijonesa S.A. and German Patent Application Nos. 19,508,122 and 4,214,932 both in the name of Nierstenhofer. All of the known constructions of coffin transporters resemble hospital or ambulance gurneys and many have collapsible legs to allow insertion of the coffin into a hearse. Although effective for manoeuvring coffins in churches and areas where there are little or no space restrictions, there are numerous problems with the known coffin transporters.

First of all, the known coffin transporters are relatively cumbersome and are typically the same or of equivalent size to the coffin. This results in a coffin transporter that is not particularly manoeuvrable. It is often necessary to manoeuvre the coffin through relatively narrow hallways and doorways and it is difficult if not impossible in some cases to turn the coffin and coffin transporter sufficiently to navigate the hallway or doorway. In those circumstances, the coffin must be lifted off the coffin transporter and manually guided by two people through the hallway or doorway. Although every care is taken to ensure that the coffin does not bang against a wall or doorway, this is regrettably not an altogether uncommon occurrence. Such contact can not only cause damage to the wall or door frame but also cause distress to the bereaved.

In addition to the above, due to their size, the known coffin transporters are difficult to stow safely and unobtrusively in a hearse or other funeral vehicle and therefore are either unsightly or require modification to the interior of the hearse in order to be transported with the hearse. Furthermore, the know coffin transporters usually require two or more people to operate, even to simply load an empty coffin onto the coffin transporter in a warehouse. This is undesirable. Finally, the known coffin transporters are relatively labour intensive and expensive to manufacture and ship.

It is an object of the present invention to provide a coffin transporter that is highly manoeuvrable, inexpensive to manufacture, useful and simple to operate.

### Statements of Invention

According to the invention there is provided a coffin transporter comprising a platform dimensioned to receive the end of a coffin thereon and a plurality of ground engaging wheels supporting the platform, the platform having dimensions no greater than 0.75 metres wide by 0.75 metres long and in which the platform is provided with a transverse channel for reception of the edge of the end of the coffin.

By having such a coffin transporter, it will be possible to manoeuvre the coffin through premises such as homes with relatively narrow doorways and passageways with decorum and in a dignified manner. The coffin transporter will reduce the incidences of damage caused to doorways and walls caused by manoeuvring the coffin through those narrow passageways and will greatly facilitate the placement of the coffin in the premises in a respectful and inoffensive way. The provision of a transverse channel for reception of the edge of the end of the coffin is seen as particularly useful as this will provide a sound engagement between the coffin and the platform which will enhance the manoeuvrability of the coffin.

In one embodiment of the invention there is provided a coffin transporter in which the transverse channel is substantially V-shaped in cross section. This is seen as a particularly preferred embodiment of the invention. By having a V-shaped channel, the coffin may be transported in a substantially horizontal or reclined manner or in a substantially vertical or upright manner. Furthermore, the V-shaped channel will allow the coffin to be transitioned to and from a substantially reclined configuration to and from a substantially upright configuration.

In one embodiment of the invention there is provided a coffin transporter in which the sides of the V-shaped transverse channel together form an angle of between approximately 160º and 120º.

In one embodiment of the invention there is provided a coffin transporter in which the sides of the V-shaped transverse channel together form an angle of approximately 140º.

In one embodiment of the invention there is provided a coffin transporter in which there is provided a non-slip material on the upwardly facing surface of the platform.

In one embodiment of the invention there is provided a coffin transporter in which the non-slip material comprises a ribbed rubber material. This is seen as a particularly useful non-slip material to use as it will not be inclined to damage the coffin and will furthermore ensure a secure engagement between the coffin and the coffin transporter obviating the possibility of the coffin slipping off the coffin transporter during transit.

In one embodiment of the invention there is provided a coffin transporter in which there is provided a resiliently deformable material layer on the upwardly facing surface of the platform. By having a resiliently deformable material layer on the upwardly facing surface of the platform, any decorative handles or carvings on the end of the coffin will effectively be cushioned as the coffin is transported on its end on the coffin transporter.

In one embodiment of the invention there are provided at least three ground engaging wheels. This will provide a sound base on which the coffin may be transported.

In one embodiment of the invention there are provided four ground engaging wheels.

In one embodiment of the invention there is provided a coffin transporter in which the wheels are castor wheels freely rotatable about both a vertical axis and a horizontal axis. Castor wheels are seen as particularly suitable as they will allow omnidirectional movement of the coffin transporter in a horizontal plane. This will provide excellent manoeuvrability of the coffin on the coffin transporter.

In one embodiment of the invention there is provided a coffin transporter in which the castor wheels are twin castor wheels.

In one embodiment of the invention the platform has dimensions no greater than 0.50 metres wide by 0.50 metres long.

In one embodiment of the invention the platform has dimensions no greater than 0.35 metres wide by 0.30 metres long. By having a platform with these dimensions, the coffin transporter will be able to travel through most openings and will stow away neatly in a hearse or the like.

In one embodiment of the invention the platform has a height dimension of no more than 0.15 metres. Preferably, the height dimension of the platform will be no more than 0.10 metres high. This is useful as the platform will not raise the height of the coffin significantly particularly when the coffin is being transported on its end in a substantially upright manner through a doorway.

### Detailed Description of the Invention

The invention will now be more clearly understood from the following description of some embodiments thereof given by way of example only with reference to the accompanying drawings, in which:-
Figure 1 is a side perspective view of a coffin transporter according to the invention;
Figure 2 is a front perspective view of the coffin transporter according to the invention;
Figure 3 is a side view taken from below of the coffin transporter;
Figure 4 is a view of the underside of the coffin transporter;
Figure 5 is another view of the underside of the coffin transporter;
Figure 6 is a side view of the coffin transporter in use transporting a coffin with the coffin in a reclined configuration; and
Figure 7 is a front view of the coffin transporter in use transporting a coffin with the coffin in a substantially upright configuration.

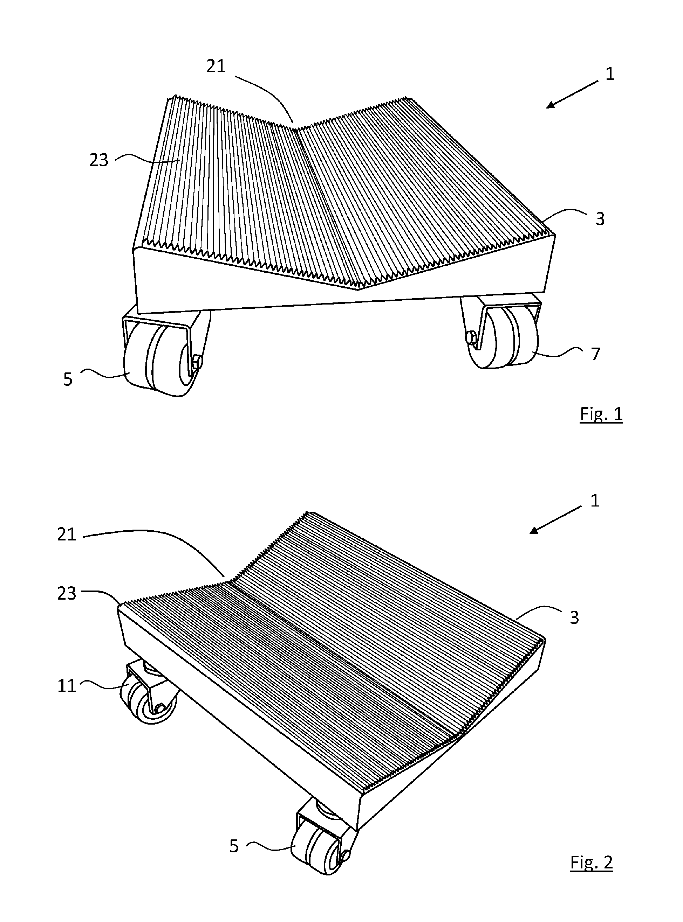

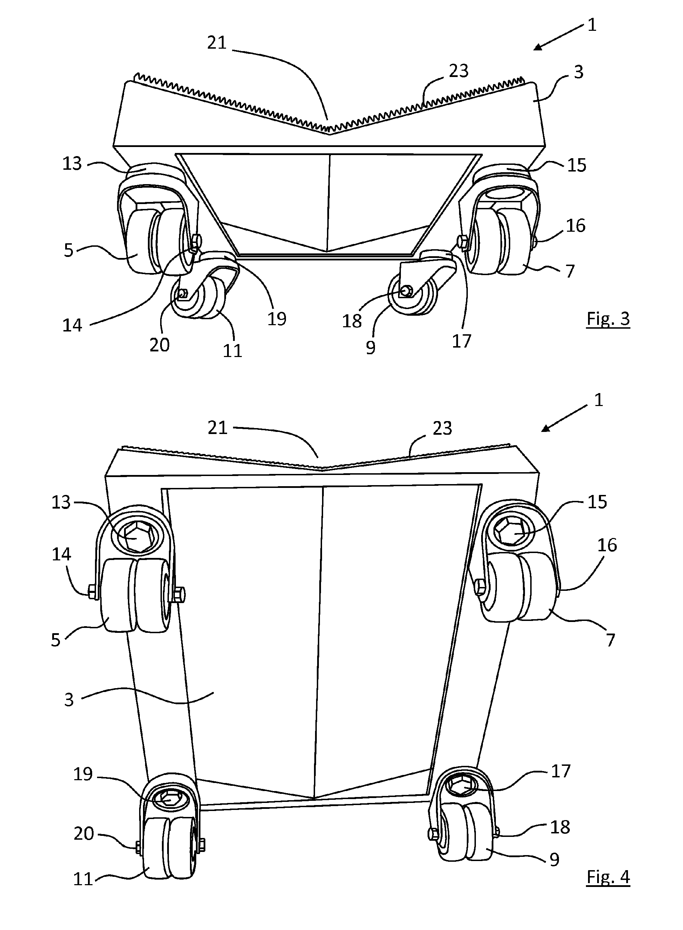

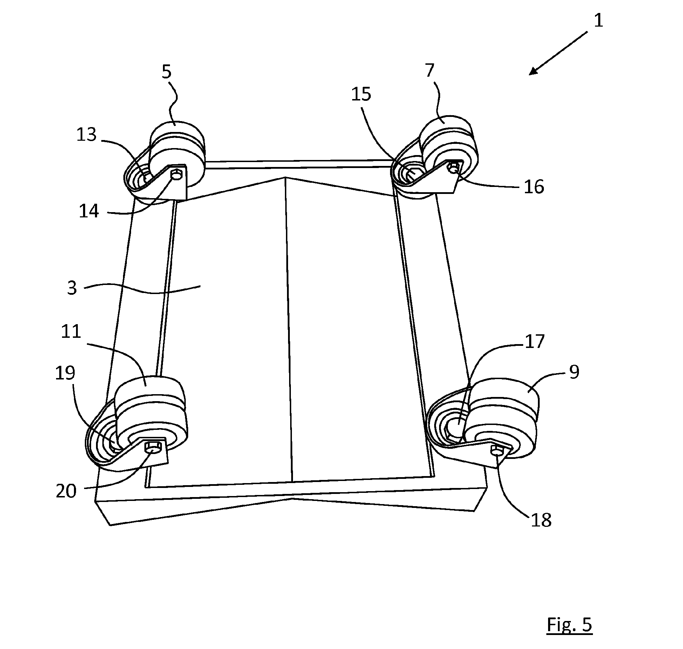

Referring to Figures 1 to 5 inclusive, there is shown a coffin transporter, indicated generally by the reference numeral 1, comprising a platform 3 and a plurality of ground engaging wheels 5, 7, 9, 11. The wheels 5, 7, 9, 11 are twin castor wheels, each of which is rotatable about a substantially vertical axis 13, 15, 17, 19 respectively and a substantially horizontal axis 14, 16, 18, 20 respectively, thereby allowing omnidirectional movement of the coffin transporter 1 in a horizontal plane.

The platform has a transverse channel 21 extending across the width of the platform. The channel is substantially V-shaped in cross section and forms an angle of between 120º and 160º, preferably 140º and is suitably dimensioned to receive the edge (not shown) of the end of a coffin. The platform has a non-slip resiliently deformable coating 23, in this case ribbed rubber, thereon to provide enhanced grip to the coffin. The platform is constructed from stainless steel and has dimensions of the order of 0.75 metres wide by 0.75 metres long and a height of approximately 0.15 metres high. Preferably, the platform is constructed from 0.0015 metres stainless steel. In the embodiment shown, the coffin transporter has dimensions of the order of 0.35 metres wide by 0.30 metres long and a height of approximately 0.10 metres high.

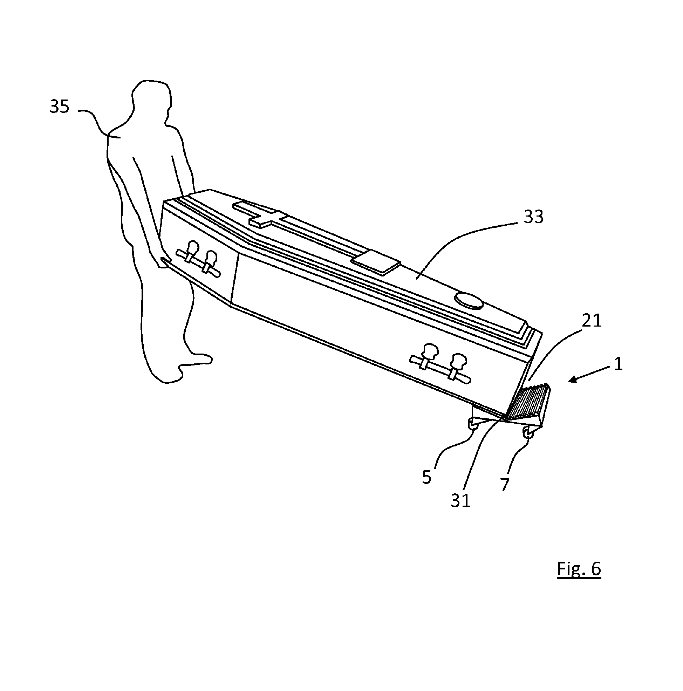

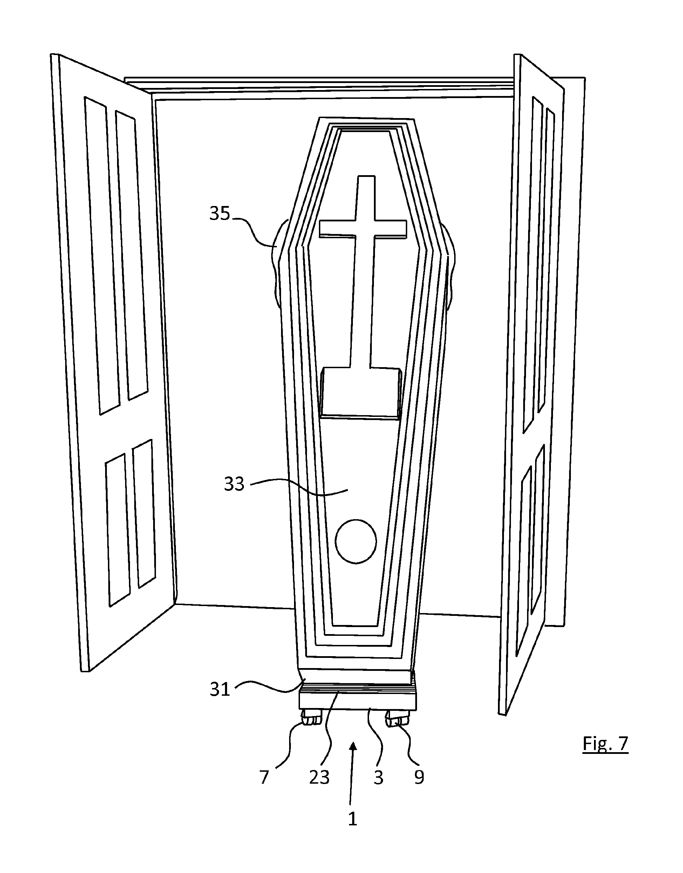

Referring now to Figures 6 and 7, there are shown a pair of views of the coffin transporter in operation. In use, the end 31 of a coffin 33 is located in the V-shaped transverse channel 21 and the other end of the coffin is held by an operator 35. The operator manoeuvres the coffin 33 in the desired direction by pushing or pulling the coffin 33. In this mode, the coffin 33 is in a substantially reclined configuration (Figure 6). In order to turn the coffin in, for example, a narrow passageway, it will be necessary to raise the coffin upwardly until the coffin is in a substantially upright or vertical configuration (Figure 7). This is achieved by the operator 35 raising the end of the coffin that they are holding onto gradually upwards until the coffin is in the upright configuration shown in Figure 7 and can be turned in the passageway in a dignified manner.

It will be understood that the visibility of the operator 35 may be impaired with the coffin in the upright configuration shown in Figure 7 and therefore it is envisaged that it will be preferable to lower the coffin once more to the reclined configuration shown in Figure 6 as soon as possible.

It can be seen from Figures 6 and 7 that the transition to and from the reclined configuration as shown in Figure 6 and the upright configuration as shown in Figure 7 is relatively seamless and simple to perform. This is facilitated in part by the secure engagement promoted by the V-shaped transverse channel 21 and the non-slip ribbed rubber coating on the platform.

As an alternative to stainless steel, the platform could be constructed from other materials including but not limited to a heavy duty plastics material or fibreglass. The platform can come in a variety of sizes but in the particularly preferred embodiment shown the platform has dimensions of the order of 0.35 metres wide (by wide, what is meant is the direction from the corner with the wheel 5 located adjacent thereto to the corner with the wheel 11 located adjacent thereto, or in other words, in a direction substantially parallel to the transverse channel 21) by 0.30 metres long (by long, what is meant is the direction from the corner with the wheel 5 located adjacent thereto, to the corner with the wheel 7 located adjacent thereto, or in other words, in a direction substantially orthogonal to the transverse channel 21) and a height (from the bottom or lowermost point when in use of the ground engaging wheel to the highest point on the platform) of approximately 0.10 metres.

The coffin transporter's platform 3 in the embodiment shown is substantially rectangular in shape however other shapes of platform are also envisaged including, but not limited to, a substantially circular platform. A circular platform could be provided with more or less than four ground engaging wheels. For example, a circular platform may be provided with three ground engaging castor wheels that are equally spaced circumferentially about the platform. Similarly, the circular platform could be provided with five or more ground engaging wheels equally spaced circumferentially about the platform however four is seen as sufficient in most cases.

In this specification the terms "comprise, comprises, comprising and comprised" are all deemed totally interchangeable and the terms "include, includes, included and including are all deemed totally interchangeable and should be afforded the widest possible interpretation.

This invention is in no way limited to the embodiment hereinbefore described but may vary in both construction and detail within the scope of the claims.

## Claims

1. A coffin transporter (1) comprising a platform (3) dimensioned to receive the end (31) of a coffin (33) thereon and a plurality of ground engaging wheels (5, 7, 9, 11) supporting the platform, the platform having dimensions no greater than 0.75 metres wide by 0.75 metres long and in which the platform (3) is provided with a transverse channel (21) for reception of the edge of the end of the coffin.

2. A coffin transporter (1) as claimed in claim 1 in which the transverse channel (21) is substantially V-shaped in cross section.

3. A coffin transporter (1) as claimed in claim 2 in which the sides of the V-shaped transverse channel (21) together form an angle of between approximately 160º and 120º.

4. A coffin transporter (1) as claimed in claim 3 in which the sides of the V-shaped transverse channel (1) together form an angle of approximately 140º.

5. A coffin transporter (1) as claimed in any preceding claim in which there is provided a non-slip material (23) on the upwardly facing surface of the platform (3).

6. A coffin transporter (1) as claimed in claim 5 in which the non-slip material comprises a ribbed rubber material.

7. A coffin transporter (1) as claimed in any preceding claim in which there is provided a resiliently deformable material layer on the upwardly facing surface of the platform (3).

8. A coffin transporter (1) as claimed in any preceding claim in which there are provided at least three ground engaging wheels.

9. A coffin transporter (1) as claimed in any preceding claim in which there are provided four ground engaging wheels (5, 7, 9, 11).

10. A coffin transporter (1) as claimed in any preceding claim in which the wheels (5, 7, 9, 11) are castor wheels freely rotatable about both a vertical axis (13, 15, 17, 19) and a horizontal axis (14, 16, 18, 20).

11. A coffin transporter (1) as claimed in claim 10 in which the castor wheels (5, 7, 9, 11) are twin castor wheels.

12. A coffin transporter (1) as claimed in any preceding claim in which the platform (3) has dimensions no greater than 0.50 metres wide by 0.50 metres long.

13. A coffin transporter (1) as claimed in any preceding claim in which the platform (3) has dimensions no greater than 0.35 metres wide by 0.30 metres long.

14. A coffin transporter (1) as claimed in any preceding claim in which the platform (3) has a height dimension of no more than 0.15 metres.
